# FASCICULE DE BREVET EUROPEEN

(11) **EP 1 112 933 B1**
(45) Date de publication et mention de la délivrance du brevet: **10.05.2006**
(21) Numéro de dépôt: 00403687.7
(22) Date de dépôt: 27.12.2000
(51) Int. Cl.: B65B 21/06, B65G 19/26

(54) **Système de convoyage d'objets**
FÖRDERSYSTEM FÜR GEGENSTÄNDE
Article transporting system

(30) Priorité: 29.12.1999 FR 9916658; 29.12.1999 FR 9916660; 21.06.2000 FR 0007945
(43) Date de publication de la demande: 04.07.2001
(73) Titulaire: ARIES PACKAGING, 10430 Rosieres-Pres-Troyes (FR)
(72) Inventeur: De Gugliemo, Pascal, 10300 Montgueux (FR); Cartier, Alain, 10190 Fontvannes (FR); Clerget, Didier, 10000 Troyes (FR)
(74) Mandataire: Geismar, Thierry

(56) Documents cités:
- EP-A- 0 526 184
- DE-A- 3 129 723
- DE-A- 3 151 997
- US-A- 3 845 852
- US-A- 4 552 261

## Description

L'invention s'applique notamment au conditionnement d'articles tels que des bouteilles ou des canettes, généralement de forme cylindrique.

II est connu que les articles sont d'abord acheminés individuellement sur une voie d'alimentation jusqu'à un poste de groupage où des lots d'articles sont formés puis espacés pour être transférés vers une voie d'évacuation le long de laquelle ils sont emballés, ou empaquetés.

Pour former un espace entre deux lots d'articles successifs, il est connu d'accélérer les lots d'articles entre la voie d'alimentation et la voie d'évacuation.

A ce sujet, on peut citer notamment le document GB-974 995.

L'espace alors formé entre les mêmes faces de deux lots consécutifs est appelé « pas » ou « pas machine ».

Les distributeurs cherchent à l'heure actuelle à diminuer leurs stocks tout en proposant des gammes de produits emballés toujours plus diversifiées.

Par ailleurs, les distributeurs exigent de pouvoir varier leur offre au sein d'une même gamme de produit, en proposant aux consommateurs, pour un même article tel qu'une bouteille ou une canette remplie de boisson, des conditionnements variés tels que des packs de deux, de trois, de quatre, de six, de huit articles ou plus.

Afin de répondre à ces exigences, les constructeurs doivent être en mesure de renouveler sans cesse leurs gammes de machines, de sorte à les adapter non seulement aux formes des nouveaux produits, à leurs tailles, à leurs poids, mais également à la taille et à la forme de leurs emballage, le plus souvent des flans en carton ou équivalent.

Actuellement, les constructeurs proposent aux distributeurs des solutions ou des machines de conditionnement qui présentent de nombreux inconvénients.

Certains constructeurs proposent aux distributeurs une machine pour chaque type de produit fini, ce qui est lourd et coûteux.

D'autres fabriquants proposent quant à eux une machine pour chaque gamme de produit, ce qui nécessite de régler la machine selon le type de conditionnement souhaité : lots de deux, de quatre, de six, de huit, ou plus.

En effet, à débit machine constant (donc à vitesse d'entrée constante), il y a lieu d'adapter la vitesse de sortie et/ou le pas machine.

La plupart des machines ne présentent pas de système de réglage du pas. Il est donc nécessaire d'augmenter la vitesse de sortie, le pas étant fixe quel que soit le nombre d'articles par lot, tel que par exemple dans le document DE 31 29 723.

Ainsi, passer par exemple d'un groupage par lots de douze articles à un groupage par lots de quatre nécessite de tripler la vitesse de sortie de la machine, ce qui est incompatible avec les limites physiques des installations, et en particulier des dispositifs d'emballage.

Certaines machines présentent des systèmes manuels de réglage du pas, ce qui nécessite autant d'interventions manuelles qu'il y a de changements de produit au sein d'une même gamme.

A l'heure actuelle, la fréquence de ces changements peut atteindre deux à trois par jour, fréquence difficile à atteindre au moyen de réglages manuels.

L'invention vise à résoudre notamment les inconvénients précités de l'art antérieur, en proposant un système de convoyage qui permette le réglage automatique à la fois du pas machine, et de la cadence de production.

A cet effet, l'objet de l'invention est un système de convoyage d'objets, qui comprend au moins un transporteur sans fin apte à acheminer les objets le long d'une surface dite de transport, le transporteur comprenant une pluralité de poussoirs régulièrement espacés, fixés à un support mobile des poussoirs, circulant en continu, à sens unique et de manière périodique le long d'une trajectoire en boucle fermée qui s'étend sensiblement dans un plan dit de convoyage, perpendiculaire à la dite surface de transport, la trajectoire étant localement contiguë à la surface de transport, chaque poussoir étant monté mobile entre une position dite inactive où le poussoir est localisé à distance de la surface de transport et ne saille pas de celle-ci, et une position dite active où il saille au moins partiellement de la surface de transport pour venir en prise avec un objet et pousser cet objet le long de la dite surface, de sorte que l'on peut faire varier le nombre de poussoirs simultanément en position active, et, de cette manière, faire varier la distance entre deux poussoirs actifs.

Selon un mode de réalisation, ledit système de convoyage comprend :
- un moyen d'entraînement du moyen de support ;
- un organe mobile d'actionnement des poussoirs pour les faire passer de leur position inactive à leur position active au niveau de la surface de transport ;
- un moyen d'entraînement du dit organe d'actionnement ;
- un dispositif de commande des moyens d'entraînement.

Le dispositif de commande est agencé pour appliquer notamment au moyen d'entraînement du moyen de support et/ou au moyen d'entraînement de l'organe d'actionnement un profil de vitesse choisi parmi un ensemble pré-programmé de profils de vitesse.

Par exemple, le dispositif de commande est agencé pour appliquer au moyen d'entraînement de l'organe d'actionnement un profil de vitesse tel que le fonctionnement de l'organe d'actionnement soit périodique, la période de l'organe d'actionnement étant définie comme l'intervalle de temps séparant deux passages successifs de l'organe d'actionnement par une même position.

La période du transporteur étant définie comme l'intervalle de temps séparant le passage de deux poussoirs par un même point de la trajectoire, le dispositif de commande est par exemple agencé pour que la période de l'organe d'actionnement soit un multiple de la période du transporteur.

Selon un mode de réalisation, le dit support mobile est une chaîne sans fin engrenant deux pignons dont l'un au moins est asservi au dispositif de commande.

Tandis que chaque poussoir se présente par exemple sous la forme d'une pièce rigide qui comprend une première branche apte à venir en prise avec l'organe d'entraînement, ainsi qu'une deuxième branche sensiblement perpendiculaire à la première, apte à saillir au moins en partie de la surface de transport pour venir en prise avec un objet.

Selon un mode de réalisation, la deuxième branche comporte une surface sensiblement perpendiculaire au dit plan de convoyage, et qui, lorsque le poussoir est dans sa position active, s'étend sensiblement perpendiculairement à la surface de transport pour venir en contact avec l'objet.

En outre, chaque poussoir comprend par exemple un axe sensiblement perpendiculaire au plan de convoyage, formant moyen de fixation du poussoir au moyen de support, et autour duquel le poussoir est apte à pivoter, pour passer de sa position inactive à sa position active, ou réciproquement.

Selon un mode de réalisation, le transporteur comprend un rail de guidage qui s'étend sensiblement dans le plan de convoyage, sensiblement le long de la trajectoire définie par le support.

Le rail de guidage peut comprendre, sensiblement le long de la surface de transport, une première voie dite supérieure de guidage des poussoirs, contiguë à la surface de transport, et une deuxième voie dite inférieure de guidage des poussoirs, parallèle à la première.

Chaque poussoir peut quant à lui comprendre, seuls ou en combinaison :
- au moins un premier ergot, saillant de la première branche sensiblement perpendiculairement au plan de convoyage, apte à coopérer avec la voie inférieure lorsque le poussoir est en position inactive, et avec la voie supérieure lorsque le poussoir est en position active ;
- au moins un deuxième ergot, saillant de la deuxième branche perpendiculairement au plan de convoyage, apte à coopérer avec la voie supérieure lorsque le poussoir est en position inactive.

Selon un mode de réalisation, le transporteur présente une zone dite d'aiguillage où le rail de guidage est interrompu, et dans laquelle les poussoirs sont aptes à pivoter autour de leur axe pour passer de leur position inactive à leur position active.

L'organe d'actionnement peut quant à lui comprendre une came étendue sensiblement dans le plan de convoyage à proximité de la dite zone d'aiguillage, et entraînée en rotation dans ce plan autour d'un axe sensiblement perpendiculaire à celui-ci par le dit moyen d'entraînement, en passant par une première position angulaire où la dite came engage au moins l'un des poussoirs pour le faire pivoter autour de son axe depuis sa position inactive vers sa position active lors de son passage par la zone d'aiguillage, et une deuxième position angulaire où la dite came dégage le poussoir.

Par exemple, la came est agencée pour venir momentanément en prise avec la deuxième branche de le poussoir pour faire pivoter ce dernier en aiguillant son premier ergot depuis la voie inférieure vers la voie supérieure.

Selon une première disposition, le dispositif de commande est agencé pour appliquer au dit moyen d'entraînement un profil de vitesse continue, périodique, variable en fonction de la position angulaire de la came, cette vitesse étant:
- de signe constant, de sorte que la came tourne à sens unique dans le même sens que le moyen de support mobile ;
- sensiblement constante et égale à une première valeur entre la première et la deuxième position angulaire de la came ;
- la came tourne à une vitesse non constante, croissante puis décroissante entre la deuxième et la première position angulaire de la came.

Selon une deuxième disposition, le dispositif de commande est agencé pour appliquer au dit moyen d'entraînement un profil de vitesse continue, périodique, variable en fonction de la position angulaire de la came, cette vitesse étant :
- de signe constant, de sorte que la came tourne à sens unique dans le, même sens que le moyen de support mobile ;
- sensiblement constante et égale à une première valeur entre la première et la deuxième position angulaire de la came ;
- la came tourne à une vitesse non constante, décroissante puis croissante entre la deuxième et la première position angulaire de la came.

Par exemple, ce profil de vitesse est choisi parmi un ensemble pré-programmé de profils de vitesse tel que les moyens d'actionnement engagent de manière sélective un certain nombre de poussoirs successifs appartenant à un sous-ensemble prédéterminé de l'ensemble des poussoirs.

Selon un mode de réalisation, le moyen d'entraînement du moyen de support et/ou le moyen d'entraînement de l'organe d'actionnement comprennent au moins un moteur dont la vitesse de rotation est réglable de façon continue, tel qu'un moteur électrique, du type à courant continu sans balais.

D'autres objets et avantages de l'invention apparaîtront au cours de la description qui va suivre de modes de réalisation, description faite en référence aux dessins annexés, dans lesquels :

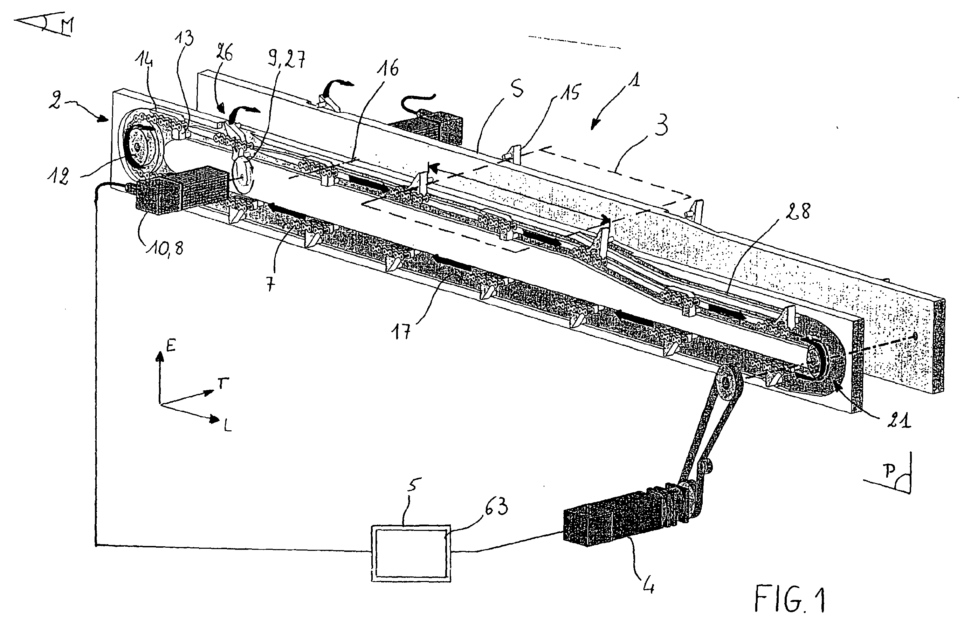

- la figure 1 est une vue en perspective d'un système de convoyage comprenant deux transporteurs sans fin parallèles pour l'acheminement d'objets plats tels que des flans en carton ou équivalent ; ces transporteurs comprennent chacun une pluralité de poussoirs articulés aptes à être engagés par un organe d'actionnement rotatif réglable ;

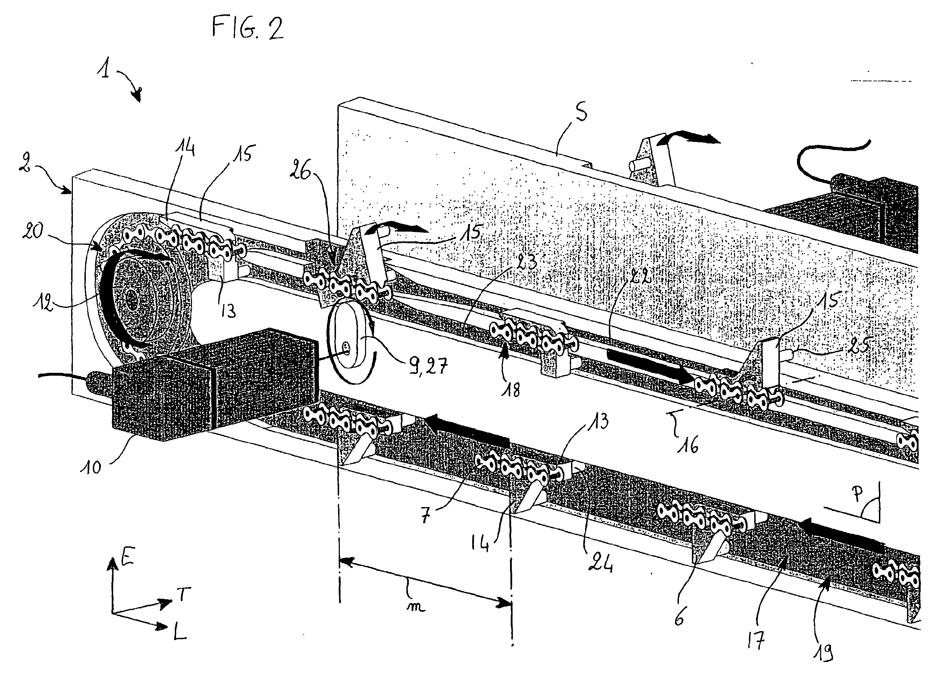

- la figure 2 est une vue d'un détail de la figure 1, qui illustre le pivotement d'un poussoir en prise avec l'organe d'actionnement ;

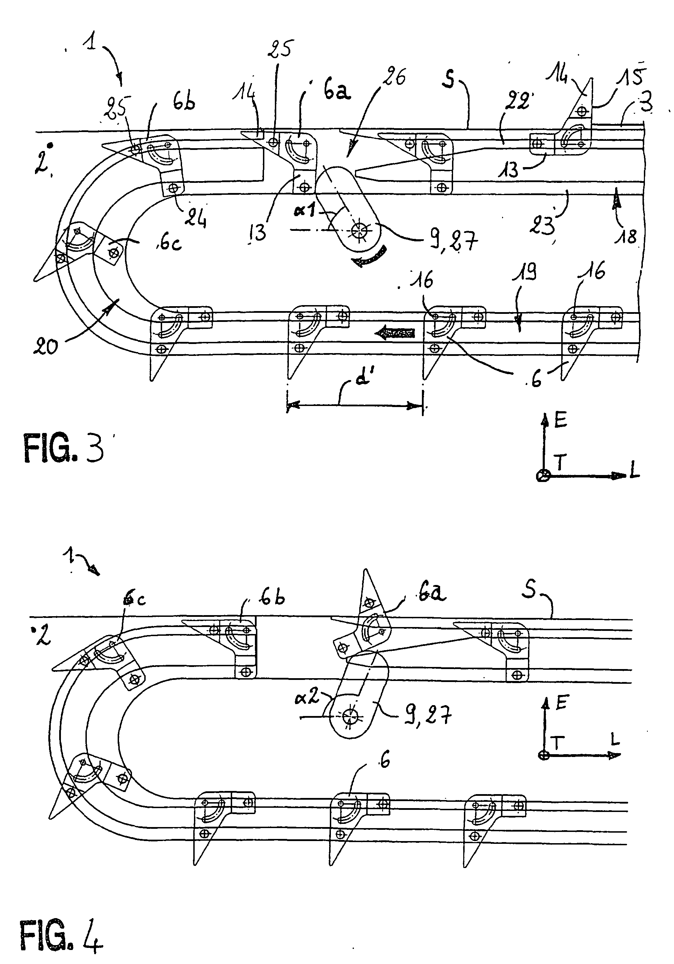

- les figures 3 à 6 sont des vues d'élévation longitudinale du système de convoyage des figures 1 et 2, qui illustrent quatre étapes successives du pivotement d'un poussoir depuis une position dite inactive vers une position active, selon un premier réglage de l'organe d'actionnement, de sorte que ce dernier actionne un poussoir sur deux ;

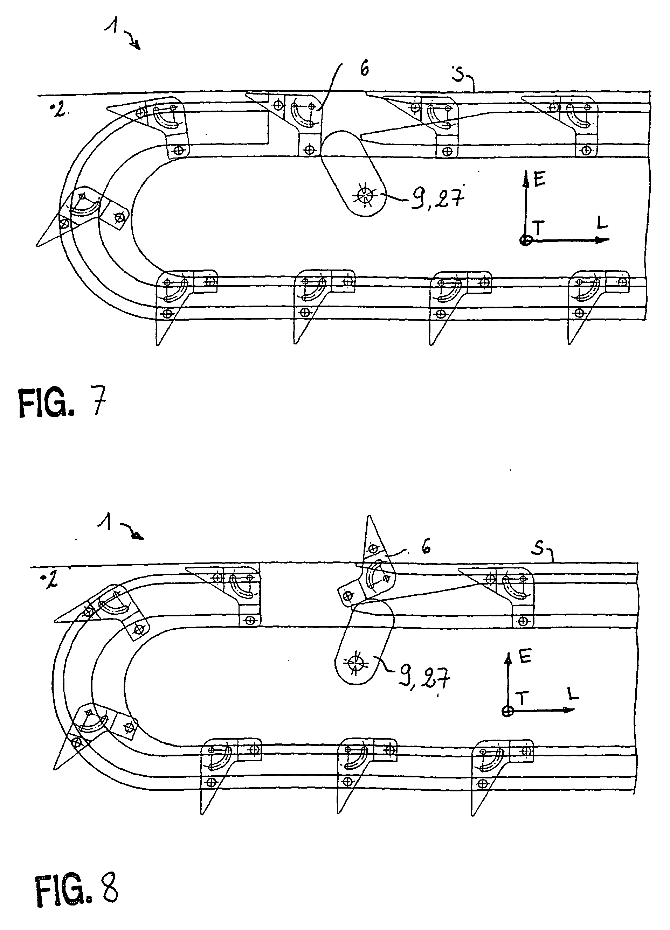

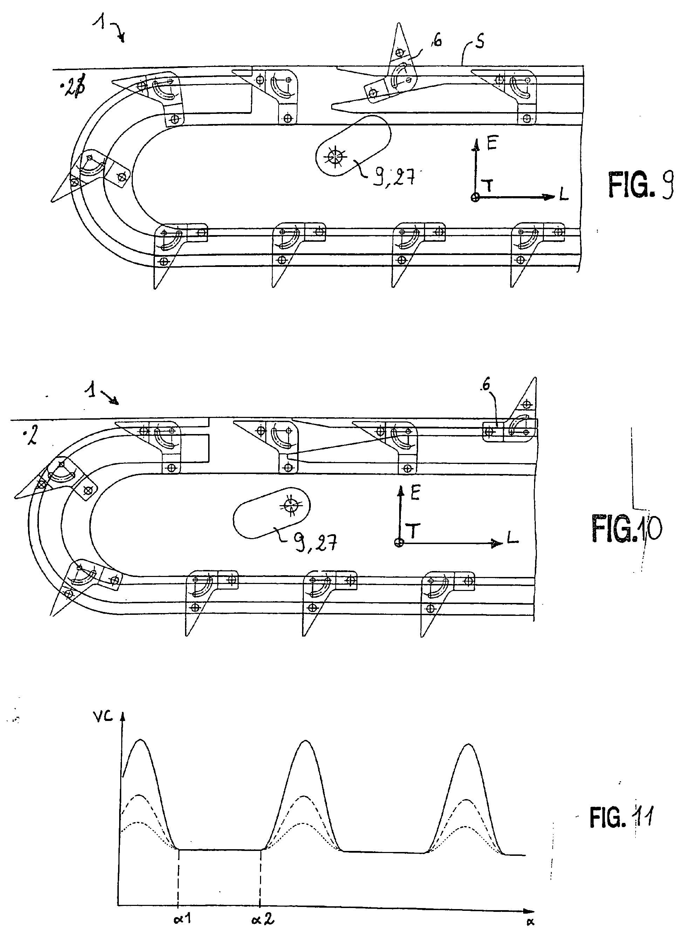

- les figures 7 à 10 sont des vues similaires aux vues des figures 3 à 6, qui illustrent quatre étapes successives du pivotement d'un poussoir depuis une position dite inactive vers une position active, selon un deuxième réglage de l'organe d'actionnement, de sorte que ce dernier actionne un poussoir sur trois ;
- la figure 11 est un diagramme illustrant l'évolution de la vitesse de rotation de l'organe d'actionnement du système de convoyage des figures 1 à 10, en fonction de sa position angulaire, selon un premier réglage où l'organe d'actionnement vient en prise avec un poussoir sur deux (traits pleins), selon un deuxième réglage où il vient en prise avec un poussoir sur trois (traits mixtes), et selon un troisième réglage où il vient en prise avec un poussoir sur quatre (traits discontinus).

Pour être conditionnés, des articles subissent un certain nombre d'opérations qui, pour plus de commodité, sont supposées avoir lieu dans un même plan de travail M sensiblement horizontal, le long d'un chemin de convoyage non représenté sensiblement selon une direction longitudinale L, représentée sur les figures 1 à 10.

Sur les figures 1 à 10 est également représentée une direction transversale T, sensiblement perpendiculaire à la direction longitudinale L en étant contenue dans le plan de travail M.

Une direction d'élévation E est aussi représentée. Cette direction est sensiblement verticale, perpendiculaire au plan M, de sorte que les directions longitudinale L, transversale T et d'élévation E forment un repère orthogonal par rapport auquel est effectuée la présente description.

Les termes « amont », « aval » sont définis par rapport à la direction longitudinale; le terme « latéral » est défini par rapport à la direction transversale, tandis que les termes « haut », « bas » sont définis par rapport à la direction d'élévation.

Sur la figure 1 est représenté un système de convoyage 1, qui comporte :
- un transporteur 2 étendu sensiblement longitudinalement, qui achemine un par un des flans 3 en carton ou équivalent de l'amont vers l'aval ;
- un moyen d'entraînement 4 du dit transporteur 2, asservi à un dispositif de commande 5.

Les flans 3 comprennent par exemple un panneau central sur lequel sont destinés à être disposés les articles à emballer, et autour duquel sont articulés des panneaux latéraux et des volets de maintien des articles.

Les flans 3 sont disposés à plat sur le transporteur 2, en étant étendus transversalement dans le plan M (figure 1).

Selon le mode de réalisation illustré sur les figures 1 à 10, le transporteur 2 comprend des poussoirs 6, chacun étant apte à venir en prise avec un flan 3 pour l'acheminer d'amont en aval.

Le dispositif 5 de commande comporte par exemple une mémoire informatique 11 dans laquelle sont stockés des ensembles de profils de vitesse destinés à être appliqués sélectivement au moyen d'entraînement 4 et à chacun des éventuels autres moyens d'entraînement.

Selon le fonctionnement prévu pour chacun de ces moyens d'entraînement, on introduit dans le dispositif de commande 5, par programmation dans la mémoire 11, des profils de vitesse constante ou variable en fonction du temps.

Le dispositif 5 de commande est ainsi agencé pour appliquer au moyen d'entraînement 4 notamment, un profil de vitesse choisi parmi un ensemble pré-programmé de profils de vitesses, introduits dans la mémoire 11.

Le moyen d'entraînement 4 est choisi pour que puisse lui être appliqué des profils de vitesse constant, le profil de vitesse étant modifié lors d'un changement de cadence par exemple.

A cet effet, il comprend par exemple un moteur 8 dont la vitesse de rotation est variable et réglable de façon continue. Ce moteur est par exemple électrique à courant continu sans balais, appelé moteur brushless.

L'on décrit à présent le système de convoyage 1, selon un mode particulier de réalisation.

Ce système de convoyage 1 permet d'acheminer les flans 3 à plat, le long d'une surface de transport S s'étendant dans le plan M, vers un convoyeur les disposant en regard des lots d'articles à emballer.

II est réglable, de sorte à pouvoir transporter des flans 3 de tailles différentes, en fonction du nombre d'articles par lot et du pas P.

A cet effet, le transporteur 2 comprend une pluralité de poussoirs 6 régulièrement espacés, fixés à un support mobile 7 qui définit une trajectoire en boucle fermée, localement contiguë à la surface S de transport.

Les poussoirs circulent en continu, à sens unique et de manière périodique le long de cette trajectoire, qui s'étend sensiblement dans un plan P d'élévation longitudinale, dit de convoyage.

Le support 7 est mis en mouvement par le moyen d'entraînement 4, asservi au dispositif de commande 5, et dont la vitesse peut varier de façon continue.

A cet effet, le moyen d'entraînement 5 peut comprendre un moteur 8 à vitesse de rotation réglable et/ou variable, par exemple un moteur brushless.

Chaque poussoir 6 est monté mobile entre une position dite inactive où le poussoir 6 est localisé à distance de la surface de transport S et ne saille pas de celle-ci, et une position dite active où il saille au moins partiellement de la surface de transport S.

Dans sa position active, le poussoir 6 vient en prise avec un flan 3 et pousse celui-ci le long de la surface de transport S.

Chaque poussoir 6 peut être actionné par un organe mobile rotatif appelé sélecteur 9, venant en prise avec le poussoir 6 pour le faire passer de sa position inactive à sa position active.

Ce sélecteur 9 est mis en mouvement par un moyen d'entraînement 10 dont la vitesse est variable, et qui à cet effet comprend un moteur brushless, ou tout autre type de moteur dont la vitesse de rotation est réglable et/ou variable de façon continue.

Le moyen d'entraînement 10 est asservi au dispositif de commande 5, dont la mémoire 11 contient un ensemble pré-programmé de profils de vitesse non constante, applicables au moyen d'entraînement 10.

Selon un mode de réalisation illustré sur les figures, le support 7 est une chaîne sans fin engrenant deux pignons 12 dont l'un au moins est associé au moteur 8.

Dans des variantes non représentées, le support 7 est une courroie crantée, ou un câble tracteur, ou tout autre moyen équivalent.

Tandis que chaque poussoir 6 est une pièce rigide en forme de V qui comprend une première branche 13 apte à venir en prise avec le sélecteur, ainsi qu'une deuxième branche 14 sensiblement perpendiculaire à la première (figure 3).

Lorsque le poussoir est en position inactive, cette deuxième branche 14 saille au moins en partie de la surface de transport S pour venir en prise avec un flan 3.

A cet effet, la deuxième branche 14 comprend une surface 15 qui, lorsque le poussoir 6 est dans sa position active, s'étend dans un plan d'élévation transversale.

Les poussoirs 6 sont régulièrement répartis le long de la chaîne 7, sur laquelle chacun est monté pivotant autour d'un axe 16 transversal, formant moyen de fixation du poussoir 6 à la chaîne 7.

Les poussoirs circulent le long de leur trajectoire en étant guidés dans un rail 17 qui s'étend sensiblement dans un plan d'élévation longitudinale, sous la surface de transport S, parallèlement à cette trajectoire.

Le rail présente une zone supérieure 18 sensiblement rectiligne, longitudinale, contiguë à la surface S de transport, une zone inférieure 19, également sensiblement rectiligne, longitudinale, localisée à distance de la surface S de transport, reliées par une première et une deuxième zones d'extrémité 20, 21, en forme de demi-cercles.

Le long de la zone supérieure 18, le rail 17 se sépare en deux voies : une voie supérieure 22, contiguë à la surface S de transport, et une voie inférieure 23 localisée sous la première voie 22.

Le poussoir 6, quant à lui, comprend un premier ergot 24, saillant latéralement de la première branche 13, et un deuxième ergot 25, saillant latéralement de la deuxième branche 14.

Les ergots 24, 25 permettent à la fois le guidage et le blocage du poussoir 6 dans le rail 17.

A proximité de la première zone d'extrémité 20, le transporteur 2 présente une zone d'aiguillage 26 où les voies 24, 25 sont interrompues, pour permettre aux poussoirs 6 de pivoter librement autour de leur axe en passant de peur position inactive à leur position active (figure 2).

Le sélecteur 9 est disposé à proximité de cette zone d'aiguillage 26.

Afin d'assurer le pivotement des poussoirs, le sélecteur 9 comprend une came 27 étendue sensiblement dans le plan P, et entraînée en rotation dans ce plan P autour d'un axe transversal.

L'on note α la position angulaire de la came 27 dans le plan P.

La came 27 est adjacente à la zone supérieure 18 du rail, pour venir momentanément en prise avec la deuxième branche 14 du poussoir 6 de manière à faire pivoter ce dernier.

Lors de sa rotation, la came 27 passe par une première position angulaire α1 où elle engage au moins le poussoir 6 pour le faire pivoter autour de son axe 16, et une deuxième position angulaire α2 où elle dégage le poussoir 6.

Le système de convoyage 1 est prévu pour que la came 27 agisse sur un sous-ensemble prédéterminé de l'ensemble de poussoirs 6 du transporteur 2.

A cet effet, le fonctionnement de la came 27 est périodique, sa période étant définie comme l'intervalle de temps séparant deux passages successifs de la came 27 par une même position angulaire.

Si l'on définit la période du transporteur 2 comme l'intervalle de temps séparant le passage de deux poussoirs par un même point de la trajectoire définie par la chaîne 7, la période de la came 27 est un multiple de la période du transporteur 2.

La période de la came 27 est réglable en appliquant à son moyen d'entraînement 10 un profil de vitesse choisi parmi un ensemble pré-programmé dans la mémoire 11 du dispositif de commande 5.

Ainsi, la came 27 est prévue pour actionner un poussoir 6 sur deux, un sur trois, un sur quatre, ou plus. Sa vitesse de rotation VC est donc régulée en conséquence.

Il est donc possible de faire varier le nombre de poussoirs simultanément en position active.

La vitesse VC à laquelle la came 27 est entraînée par son moyen d'entraînement 10 est continue, périodique, et variable en fonction de la position angulaire α de la came 27.

Notamment, la vitesse VC présente notamment les caractéristiques suivantes (figure 11):
- elle est de signe constant, de sorte que la came 27 tourne à sens unique dans le même sens que la chaîne 7 ;
- elle est sensiblement constante depuis la première position angulaire α1 jusqu'à la deuxième position angulaire α2 de la came 27 ;
- elle est non constante, par exemple croissante puis décroissante, ou inversement en fonction du réglage, depuis la deuxième position angulaire α2 jusqu'à la première position angulaire α1 de la came 27.

Le profil de vitesse de la came 27 est, par exemple, choisi parmi un ensemble de profils de vitesse pré-programmé dans la mémoire 11 du dispositif de commande 5.

De la sorte, en fonction de sa vitesse, la came 27 peut engager de manière sélective un certain nombre de poussoirs 6 successifs appartenant à un sous-ensemble prédéterminé de l'ensemble des poussoirs 6.

Trois profils de vitesse VC de la came 27, en fonction de sa position angulaire, sont représentés sur la figure 11.

Le profil représenté en traits pleins correspond à un réglage de la came 27 selon lequel cette dernière actionne un poussoir 6 sur deux.

Tandis que les profils représentés en traits mixte et discontinu correspondent respectivement à deux réglages selon lesquels la came 27 actionne un poussoir sur trois, et un poussoir sur quatre.

La distance d séparant les surfaces 15 de deux poussoirs successifs en position active est sensiblement égale au pas P de l'installation.

En effet, cette distance correspond à l'écart entre deux flans 3 successifs, destinés à être disposés en regard des lots d'articles, par exemple sous ceux-ci, préalablement à la constitution des packs.

La distance d est donc un multiple de la distance m séparant deux poussoirs 6 successifs sur la chaîne 7.

Cette distance m, appelée module, est fixée lors de la fabrication de l'installation, et notamment du système de convoyage 1.

On décrit à présent un mode de fonctionnement du dispositif de convoyage 1, selon un premier réglage où la came 27 engage un poussoir 6 sur deux, en référence aux figures.

On suit pour cela la course d'un premier, d'un deuxième et d'un troisième poussoirs 6a, 6b, 6c successifs le long de leur trajectoire, en partant d'une localisation où les poussoirs 6a, 6b, 6c sont tous trois dans la zone inférieure 19 du rail 17.

Les trois poussoirs 6a, 6b, 6c sont acheminés le long de la zone inférieure 19, puis le long de la première zone d'extrémité 20, en étant maintenus fixes en rotation dans le rail 17, les ergots 24, 25 étant en butée contre les bords du rail.

Au sortir de la première zone d'extrémité 20, le premier ergot 24 des poussoirs 6a, 6b, 6c est guidé par la voie inférieure, tandis que le deuxième ergot 25 est guidé par la voie supérieure 22.

Les poussoirs 6a, 6b, 6c sont alors tous trois dans leur position inactive.

Lorsque le premier poussoir 6a débouche dans la zone d'aiguillage 26, sa deuxième branche 14 bute contre la came 27, cette dernière étant dans sa première position angulaire α1. La came 27 force alors le poussoir 6a à pivoter autour de son axe (figure 3).

Sous l'action de la came 27, qui accompagne à vitesse constante le premier poussoir 6a, le premier ergot 25 est aiguillé vers la voie supérieure 22, la deuxième branche 14 saillant de la surface S de transport vers le haut, pour venir en prise avec un flan 3 (figure 4). Le premier poussoir est alors dans sa position active.

Lorsque la came 27, dans la deuxième position angulaire α2, désengage le premier poussoir 6a, ce dernier est maintenu fixe en rotation, son deuxième ergot 25 étant guidé par la voie supérieure 22 du rail le long de la surface S de transport.

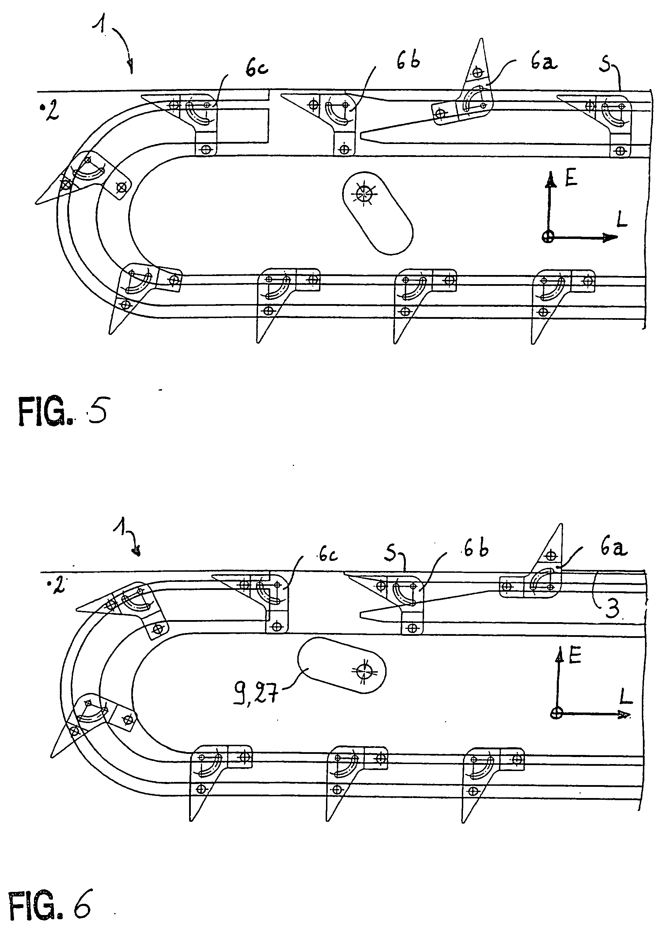

La came 27 accélère alors, en pivotant autour de son axe. Pendant ce temps, le deuxième poussoir 6b parcourt la zone d'aiguillage 26 en restant dans sa position inactive (figure 5).

Puis la came 27 décélère pour retrouver sa première position angulaire α2, et engager le deuxième poussoir 6c de la même manière que le premier poussoir 6a (figure 6).

Chaque poussoir 6 pousse un flan 3 jusqu'au convoyeur de sortie (non représenté). Après que le flan a été pris en charge par ledit convoyeur, le poussoir 6 reprend sa position inactive dans la deuxième zone d'extrémité 21 du transporteur 2, par exemple en pivotant par gravité autour de son axe.

A cet effet, le rail 17 comprend une voie auxiliaire 28 débouchant dans la surface de transport S, reliant celle-ci à la deuxième zone d'extrémité 21.

A proximité de cette zone d'extrémité 21, les voies auxiliaire 28, supérieure 22 et inférieure 23 sont localement inclinées vers le bas pour forcer les poussoirs 6 actifs à s'éloigner de la surface de transport S et dégager les flans 3.

Selon un deuxième réglage où l'on diminue la vitesse maximale de rotation de la came 27, celle-ci peut engager un poussoir 6 sur trois. Ce mode de fonctionnement, identique à celui qui vient d'être décrit, est illustré sur les figures 7 à 10.

Dans ce mode de fonctionnement, le système de convoyage 1 est réglé de telle sorte que le sélecteur 9 active un poussoir 6 sur deux.

Les flans 3 acheminés par le transporteur 2 sont choisis dans des dimensions qui dépendent du pack à produire, la dimension longitudinale du flan 3 étant bien évidemment inférieure au pas P.

En choisissant comme valeur du module m la longueur d'un pack de n articles d'un lot, on peut choisir le pas de la façon suivante : *P* = *m* × *n* (1)*.*

On change de taille de flan 3.

On commande, au moyen du dispositif 5, un changement de profil de vitesse pour le sélecteur 9, de sorte que sa vitesse moyenne soit réduite d'un tiers.

Celui-ci tourne alors moins vite, pour activer un poussoir 6 sur trois au lieu d'un poussoir 6 sur deux. La distance entre deux poussoirs 6 actifs, égale au pas, est alors égale au triple du module, selon la relation (1) ci-dessus.

Par ailleurs, on diminue aussi d'un tiers la vitesse de fonctionnement des moyens d'emballage, les packs de six étant plus espacés que les packs de deux.

Le système de convoyage permet ainsi de déplacer des flans d'emballage ou d'autres types d'articles de taille variable en actionnant la totalité ou une partie seulement des poussoirs 6.

Bien entendu, on peut régler la cadence du système en augmentant simultanément et progressivement les vitesses de rotation de l'ensemble des moyens d'entraînement.

Ceci est rendu possible par l'utilisation de moteurs à vitesse de rotation réglable ou variable de façon continue, combinée à l'emploi d'un dispositif de commande et d'asservissement apte à synchroniser les moyens d'entraînement et à leur appliquer des profils de vitesse déjà programmés en mémoire.

## Revendications

1. Système de convoyage d'objets (1), qui comprend au moins un transporteur (2) sans fin apte à acheminer les objets (3) le long d'une surface (S) dite de transport, le transporteur (2) comprenant une pluralité de poussoirs (6) régulièrement espacés, fixés à un support (7) mobile des poussoirs (6), circulant en continu, à sens unique et de manière périodique le long d'une trajectoire en boucle fermée qui s'étend sensiblement dans un plan (P) dit de convoyage, perpendiculaire à la dite surface (S) de transport, la trajectoire étant localement contiguë à la surface (S) de transport, **caractérisé en ce que** chaque poussoir (6) est monté mobile entre une position dite inactive où le poussoir (6) est localisé à distance de la surface (S) de transport et ne saille pas de celle-ci, et une position dite active où il saille au moins partiellement de la surface (S) de transport pour venir en prise avec un objet (3) et pousser celui-ci le long de la dite surface (S), de sorte que l'on peut faire varier le nombre de poussoirs (6) simultanément en position active, et, de cette manière faire varier la distance entre deux poussoirs (6) actifs.

2. Système de convoyage selon la revendication 1, **caractérisé en ce qu'**il comprend :
- un moyen d'entraînement (4) du support (2);
- un organe mobile (9) d'actionnement des poussoirs (6) pour les faire passer de leur position inactive à leur position active au niveau de la surface de transport ;
- un moyen d'entraînement (10) du dit organe d'actionnement (9);
- un dispositif de commande (5) des moyens d'entraînement (4, 10).

3. Système selon la revendication 2, **caractérisé en ce que** le dispositif de commande (5) est agencé pour appliquer au moyen d'entraînement (4) du support (7) un profil de vitesse choisi parmi un ensemble pré-programmé de profils de vitesse.

4. Système selon la revendication 2 ou 3, **caractérisé en ce que** le dispositif de commande (5) est agencé pour appliquer au moyen d'entraînement (10) de l'organe d'actionnement (9) un profil de vitesse non constante, choisi parmi un ensemble pré-programmé de profils de vitesse.

5. Système selon l'une des revendications 2 à 3, **caractérisé en ce que** le dispositif de commande (5) est agencé pour appliquer au moyen d'entraînement (10) de l'organe d'actionnement (9) un profil de vitesse tel que le fonctionnement de l'organe d'actionnement (9) soit périodique, la période de l'organe d'actionnement (9) étant définie comme l'intervalle de temps séparant deux passages successifs de l'organe d'actionnement (9) par une même position.

6. Système selon la revendication 5, **caractérisé en ce que**, la période du transporteur (2) étant définie comme l'intervalle de temps séparant le passage de deux poussoirs (6) par un même point de la trajectoire, le dispositif de commande (5) est agencé pour que la période de l'organe d'actionnement (9) soit un multiple de la période du transporteur (2).

7. Système selon l'une des revendications 1 à 5, **caractérisé en ce que** le dit support mobile (7) est une chaîne sans fin engrenant deux pignons dont l'un au moins est asservi au dispositif de commande (5).

8. Système selon la revendication l'une des revendications 1 à 6, **caractérisé en ce que** chaque poussoir (6) se présente sous la forme d'une pièce rigide qui comprend une première branche (13) apte à venir en prise avec l'organe d'entraînement (9), ainsi qu'une deuxième branche (14) sensiblement perpendiculaire à la première, apte à saillir au moins en partie de la surface (S) de transport pour venir en prise avec un objet (3).

9. Système selon la revendication 8, **caractérisé en ce que** la dite deuxième branche (14) comporte une surface (15) sensiblement perpendiculaire au dit plan (P) de convoyage, et qui, lorsque le poussoir (6) est dans sa position active, s'étend sensiblement perpendiculairement à la surface (S) de transport pour venir en contact avec l'objet (3).

10. Système selon la revendication 8 ou 9, **caractérisé en ce que** chaque poussoir (6) comprend un axe (16) sensiblement perpendiculaire au plan (P) de convoyage, formant moyen de fixation du poussoir (6) au support (7), et autour duquel le poussoir (6) est apte à pivoter, pour passer de sa position inactive à sa position active, ou réciproquement.

11. Système selon la revendication 10, **caractérisé en ce que** le transporteur (2) comprend un rail (17) de guidage qui s'étend sensiblement dans le plan (P) de convoyage, sensiblement le long de la trajectoire définie par le support (7).

12. Système selon la revendication 11, **caractérisé en ce que** le rail (17) de guidage comprend, sensiblement le long de la surface (S) de transport, une première voie dite supérieure (28) de guidage des poussoirs (6), contiguë à la surface (S) de transport, et une deuxième voie (23) dite inférieure de guidage des poussoirs (6), parallèle à la première.

13. Système selon la revendication 12, **caractérisé en ce que** chaque poussoir (6) comprend au moins un premier ergot (24), saillant de la première branche (13) sensiblement perpendiculairement au plan (P) de convoyage, apte à coopérer avec la voie inférieure (23) lorsque le poussoir (6) est en position inactive, et avec la voie supérieure (22) lorsque le poussoir (6) est en position active.

14. Système selon la revendication 13, **caractérisé en ce que** chaque poussoir (6) comprend en outre au moins un deuxième ergot (25), saillant de la deuxième branche (14) perpendiculairement au plan (P) de convoyage, apte à coopérer avec la voie supérieure (22) lorsque le poussoir (6) est en position inactive.

15. Système selon l'une des revendications 12 à 14, **caractérisé en ce que** le transporteur (2) présente une zone (26) dite d'aiguillage où le rail (17) de guidage est interrompu, et dans laquelle les poussoirs (6) sont aptes à pivoter autour de leur axe (16) pour passer de peur position inactive à leur position active.

16. Système selon la revendication 15, **caractérisé en ce que** l'organe d'actionnement (9) comprend une came (27) étendue sensiblement dans le plan (P) de convoyage à proximité de la dite zone d'aiguillage (26), et entraînée en rotation dans ce plan autour d'un axe sensiblement perpendiculaire à celui-ci par le dit moyen d'entraînement (10), en passant par une première position angulaire (α1) où la dite came (27) engage au moins l'un des poussoirs (6) pour le faire pivoter autour de son axe depuis sa position inactive vers sa position active lors de son passage par la zone d'aiguillage (26), et une deuxième position angulaire (α2) où la dite came (27) dégage le poussoir (6).

17. Système selon la revendication 16, **caractérisé en ce que** la dite came (27) est agencée pour venir momentanément en prise avec la deuxième branche (14) du poussoir (6) pour faire pivoter ce dernier en aiguillant son premier ergot (24) depuis la voie inférieure (23) vers la voie supérieure (22).

18. Système selon la revendication 16 ou 17, **caractérisé en ce que** le dit dispositif (5) de commande est agencé pour appliquer au moyen d'entraînement (10) un profil de vitesse continue, périodique, variable en fonction de la position angulaire (α) de la came (27), cette vitesse étant:
- de signe constant, de sorte que la came (27) tourne à sens unique dans le même sens que le support mobile (7);
- sensiblement constante entre la première et la deuxième positions angulaires (α1, α2) de la came (27) ;
- non constante, croissante puis décroissante entre la deuxième et la première positions angulaires (α2, α1) de la came (27).

19. Système selon la revendication 16 ou 17, **caractérisé en ce que** le dit dispositif (5) de commande est agencé pour appliquer au moyen d'entraînement (10) un profil de vitesse continue, périodique, variable en fonction de la position angulaire de la came (27), cette vitesse étant :
- de signe constant, de sorte que la came (27) tourne à sens unique dans le même sens que le support mobile (7);
- sensiblement constante entre la première et la deuxième positions angulaires (α1, α2) de la came (27) ;
- la came (27) tourne à une vitesse non constante, décroissante puis croissante entre la deuxième et la première positions angulaires (α2, α1) de la came (27).

20. Système selon la revendication 18 ou 19, **caractérisé en ce que** le profil de vitesse est choisi parmi un ensemble pré-programmé de profils de vitesse tel que l'organe d'actionnement (9) engage de manière sélective un certain nombre de poussoirs (6) successifs appartenant à un sous-ensemble prédéterminé de l'ensemble des poussoirs (6).

21. Système selon l'une des revendications 2 à 20, **caractérisé en ce que** le moyen d'entraînement (4) du support (7) comprend au moins un moteur (8) dont la vitesse de rotation est réglable de façon continue.

22. Système selon l'une des revendications 2 à 21, **caractérisé en ce que** le moyen d'entraînement (10) de l'organe d'actionnement (9) comprend au moins un moteur (8) dont la vitesse de rotation est réglable de façon continue.

23. Système selon la revendication 21 ou 22, **caractérisé en ce que** le dit moteur (8) est un moteur électrique, du type à courant continu sans balais.

## Patentansprüche

1. Beförderungssystem von Gegenständen (1), das wenigstens einen zum Verbringen von Gegenständen (3) entlang einer so genannten Transportfläche (S) geeigneten Endloskonveyor (2) umfasst, wobei der Konveyor (2) eine Vielzahl von regelmäßig voneinander beabstandeten, an einem mobilen Träger (7) der Mitnehmer (6) befestigten Mitnehmern (6) umfasst, die kontinuierlich in einer Richtung und periodisch entlang einer Bahn in geschlossener Schleife zirkulieren, die sich deutlich in einer zur genannten Transportfläche (S) lotrechten, so genannten Konveyorebene (P) erstreckt, wobei die Bahn lokal an der Transportfläche (S) anliegt, **dadurch gekennzeichnet, dass** jeder Mitnehmer (6) mobil zwischen einer so genannten inaktiven Position angebracht ist, in der der Mitnehmer (6) entfernt von der Transportfläche (S) lokalisiert ist und von dieser nicht hervorsteht, und einer so genannten aktiven Position, in der wenigstens teilweise von der Transportfläche (S) hervorsteht, um in einen Gegenstand (3) einzugreifen und diesen entlang der genannten Fläche (S) derart zu schieben, dass die Anzahl von Mitnehmern (6) gleichzeitig in der aktiven Position variiert werden kann, und auf diese Weise der Abstand zwischen zwei aktiven Mitnehmern (6) variiert werden kann.

2. Beförderungssystem gemäß Anspruch 1, **dadurch gekennzeichnet, dass** es Folgendes umfasst:
- ein Antriebsmittel (4) des Trägers (2);
- ein mobiles Betätigungsorgan (9) der Mitnehmer (6), um diese von ihrer inaktiven Position in ihre aktive Position bei der Transportfläche zu verbringen;
- ein Antriebsmittel (10) des genannten Betätigungsorgans (9);
- eine Steuervorrichtung (5) der Antriebsmittel (4, 10).

3. System gemäß Anspruch 2, **dadurch gekennzeichnet, dass** die Steuervorrichtung (5) angeordnet ist, um auf das Antriebsmittel (4) des Trägers (7) ein aus einem vorprogrammierten Satz von Geschwindigkeitsprofilen ausgewähltes Geschwindigkeitsprofil anzuwenden.

4. System gemäß Anspruch 2 oder 3, **dadurch gekennzeichnet, dass** die Steuervorrichtung (5) angeordnet ist, um auf das Antriebsmittel (10) des Betätigungsorgans (9) ein nicht konstantes, aus einem Satz vorprogrammierter Geschwindigkeitsprofile ausgewähltes Geschwindigkeitsprofil anzuwenden.

5. System gemäß Anspruch 2 oder 3, **dadurch gekennzeichnet, dass** die Steuervorrichtung (5) angeordnet ist, um auf das Antriebsmittel (10) des Betätigungsorgans (9) ein Geschwindigkeitsprofil anzuwenden, so dass der Betrieb des Betätigungsorgans (9) periodisch ist, wobei die Periode des Betätigungsorgans (9) als zwei aufeinander folgende Durchgänge des Betätigungsorgans (9) durch ein und dieselbe Position trennendes Zeitintervall definiert wird.

6. System gemäß Anspruch 5, **dadurch gekennzeichnet, dass** die Periode des Konveyors (2) als der den Durchgang von zwei Mitnehmern (6) durch ein und denselben Bahnpunkt trennendes Zeitintervall definiert wird, wobei die Steuervorrichtung (5) angeordnet ist, damit die Periode des Betätigungsorgans (9) ein Vielfaches der Periode des Konveyors (2) ist.

7. System gemäß Anspruch 1 bis 5, **dadurch gekennzeichnet, dass** der genannte mobile Träger (7) eine in zwei Ritzel eingreifende Kette ist, von denen wenigstens eines von der Steuervorrichtung (5) abhängig ist.

8. System gemäß Anspruch 1 bis 6, **dadurch gekennzeichnet, dass** jeder Mitnehmer (6) die Form eines steifen Teils aufweist, das einen ersten, zum Eingreifen in das Antriebsorgan (9) geeigneten Zweig (13) sowie einen zweiten, zum ersten deutlich lotrechten, wenigstens zum teilweisen Hervorstehen aus der Transportfläche (S) geeigneten Zweig (14) aufweist, um in einen Gegenstand (3) einzugreifen.

9. System gemäß Anspruch 8, **dadurch gekennzeichnet, dass** der genannte zweite Zweig (14) eine zur genannten Förderebene (P) deutlich lotrechte Fläche (15) umfasst und der sich deutlich lotrecht zur Transportfläche (S) erstreckt, um mit dem Gegenstand (3) in Kontakt zu kommen, wenn der Mitnehmer (6) sich in seiner aktiven Position befindet.

10. System gemäß Anspruch 8 oder 9, **dadurch gekennzeichnet, dass** jeder Mitnehmer (6) eine zur Konveyorebene (P) deutlich lotrechte, ein Befestigungsmittel des Mitnehmers (6) am Träger (7) bildende Achse (16) umfasst, um die der Mitnehmer (6) schwenken kann, um von seiner inaktiven Position in seine aktive Position zu gelangen oder umgekehrt.

11. System gemäß Anspruch 10, **dadurch gekennzeichnet, dass** der Konveyor (2) eine Führungsschiene (17) umfasst, die sich deutlich in der Konveyorebene (P) deutlich entlang der vom Träger (7) definierten Bahn erstreckt.

12. System gemäß Anspruch 11, **dadurch gekennzeichnete, dass** die Führungsschiene (17) deutlich entlang der Transportfläche (S) ein erstes, an der Transportfläche (S) anliegendes, so genanntes oberes Führungsgleis (28) der Mitnehmer (6) und ein zweites, zum ersten paralleles, so genanntes unteres Führungsgleis (23) der Mitnehmer (6) umfasst.

13. System gemäß Anspruch 12, **dadurch gekennzeichnet, dass** jeder Mitnehmer (6) wenigstens einen ersten, aus dem ersten Zweig (13) hervorstehenden, zur Konveyorebene (P) deutlich lotrechten Vorsprung (24) umfasst, der geeignet ist, mit dem unteren Gleis (23) zusammenzuwirken, wenn der Mitnehmer (6) sich in inaktiver Position befindet und mit dem oberen Gleis (22), wenn der Mitnehmer (6) sich in aktiver Position befindet.

14. System gemäß Anspruch 13, **dadurch gekennzeichnet, dass** jeder Mitnehmer (6) darüber hinaus wenigstens einen zweiten, aus dem zweiten Zweig (14) hervorstehenden, zur Konveyorebene (P) senkrechten Vorsprung (25) umfasst, der geeignet ist, mit dem oberen Gleis (22) zusammenzuwirken, wenn der Mitnehmer (6) in inaktiver Position ist.

15. System gemäß Anspruch 12 bis 14, **dadurch gekennzeichnet**, das der Konveyor (2) einen so genannten Verzweigungsbereich (26) aufweist, in dem die Führungsschiene (17) unterbrochen ist, und in dem die Mitnehmer (6) geeignet sind, um ihre Achse (16) zu schwenken, um von ihrer inaktiven Position in ihre aktive Position verbracht zu werden.

16. System gemäß Anspruch 15, **dadurch gekennzeichnet, dass** das Betätigungsorgan (9) eine sich deutlich in der Konveyorebene (P) in der Nähe des so genannten Verzweigungsbereichs (26) erstreckende und in dieser Ebene in Rotation um eine zu dieser deutlich lotrechte Achse durch das genannte Antriebsmittel (10) angetriebene Nocke (27) umfasst, wobei es von einer ersten Winkelposition (α1), in der die genannte Nocke (27) wenigstens in einen der Mitnehmer (6) eingreift, um ihn bei seinem Übergang durch den Verzeigungsbereich (26) von seiner inaktiven Position in seine aktive Position um seine Achse schwenken zu lassen, in eine zweite Winkelposition (α2) übergeht, in der die genannte Nocke (27) den Mitnehmer (6) freilegt.

17. System gemäß Anspruch 16, **dadurch gekennzeichnet, dass** die genannte Nocke (27) angeordnet ist, um vorübergehend in den zweiten Zweig (14) des Mitnehmers (6) einzugreifen, um diesen durch Leiten seines ersten Vorsprungs (24) vom unteren Gleis (23) zum oberen Gleis (22) schwenken zu lassen.

18. System gemäß Anspruch 16 oder 17, **dadurch gekennzeichnet, dass** die genannte Steuervorrichtung (5) angeordnet ist, um auf das Antriebsmittel (10) ein kontinuierliches, periodisches, in Abhängigkeit von der Winkelposition (α) der Nocke (27) variables Geschwindigkeitsprofil anzuwenden, wobei diese Geschwindigkeit:
- ein konstantes Zeichen aufweist, so dass sich die Nocke (27) in einer Richtung in derselben Richtung wie der mobile Träger (7) dreht;
- zwischen der ersten und der zweiten Winkelposition (α1, α2) der Nocke (27) deutlich konstant ist;
- zwischen der zweiten und der ersten Winkelposition (α2, α1) der Nocke (27) nicht konstant, zunehmend, dann abnehmend ist.

19. System gemäß Anspruch 16 oder 17, **dadurch gekennzeichnet, dass** die genannte Steuervorrichtung (5) angeordnet ist, um auf das Antriebsmittel (10) ein kontinuierliches, periodisches, in Abhängigkeit von der Winkelposition der Nocke (27) variables Geschwindigkeitsprofil anzuwenden, wobei diese Geschwindigkeit:
- ein konstantes Zeichen aufweist, so dass sich die Nocke (27) in einer Richtung in derselben Richtung wie der mobile Träger (7) dreht;
- zwischen der ersten und der zweiten Winkelposition (α1, α2) der Nocke (27) deutlich konstant ist;
- die Nocke (27) sich in einer zwischen der zweiten und der ersten Winkelposition (α2, α1) der Nocke (27) nicht konstanten, abnehmenden, dann zunehmenden Geschwindigkeit dreht.

20. System gemäß Anspruch 18 oder 19, **dadurch gekennzeichnet, dass** das Geschwindigkeitsprofil aus einem Satz vorprogrammierter Geschwindigkeitsprofile ausgewählt wird, so dass das Betätigungsorgan (9) selektiv in eine bestimmte Anzahl von aufeinander folgenden, zu einem vorbestimmten Unteraufbau der Mitnehmer (6) gehörenden Mitnehmern (6) eingreift.

21. System gemäß Anspruch 2 bis 20, **dadurch gekennzeichnet, dass** das Antriebsmittel (4) des Trägers (7) wenigstens einen Motor (8) umfasst, dessen Rotationsgeschwindigkeit kontinuierlich eingestellt ist.

22. System gemäß Anspruch 2 bis 21, **dadurch gekennzeichnet, dass** das Antriebsmittel (10) des Betätigungsorgans (9) wenigstens einen Motor (8) umfasst, dessen Rotationsgeschwindigkeit kontinuierlich einstellbar ist.

23. System gemäß Anspruch 21 oder 22, **dadurch gekennzeichnet, dass** der genannte Motor (8) ein Elektromotor vom Typ mit Gleichstrom ohne Schleifkontakt ist.

## Claims

1. A system for conveying objects (1), which comprises at least one endless conveyor (2) able to convey the objects (3) along a so-called transport surface (S), the conveyor (2) comprising a plurality of pushers (6) evenly spaced apart, fixed to a moving support (7) for the pushers (6), travelling continuously, in a single direction and periodically along a closed-loop path which extends substantially in a so-called conveying plane (P), perpendicular to the said transport surface (S), the path being locally contiguous with the transport surface (S), **characterised in that** each pusher (6) is mounted so as to move between a so-called inactive position in which the pusher (6) is located at a distance from the transport surface (S) and does not project therefrom, and a so-called active position in which it at least partially projects from the transport surface (S) in order to come into engagement with an object (3) and push it along the said surface (S), so that it is possible to vary the number of pushers (6) simultaneously in the active position, and, in this way, to vary the distance between two active pushers (6).

2. A conveying system according to Claim 1, **characterised in that** it comprises:
- a means (4) of driving the support (2);
- a movable member (9) for actuating the pushers (6) in order to make them pass from their inactive position to their active position level with the transport surface;
- a means (10) of driving the said actuation member (9);
- a device (5) for controlling the drive means (4, 10).

3. A system according to Claim 2, **characterised in that** the control device (5) is arranged so as to apply to the means (4) of driving the support (7) a speed profile chosen from amongst a pre-programmed set of speed profiles.

4. A system according to Claim 2 or 3, **characterised in that** the control device (5) is arranged so as to apply to the means (10) of driving the actuation member (9) a non-constant speed profile chosen from amongst a pre-programmed set of speed profiles.

5. A system according to one of Claims 2 to 3, **characterised in that** the control device (5) is arranged so as to apply to the means (10) of driving the actuation member (9) a speed profile such that the functioning of the actuation member (9) is periodic, the period of the actuation member (9) being defined as the interval of time separating two successive passages of the actuation member (9) through the same position.

6. A system according to Claim 5, **characterised in that**, the period of the conveyor (2) being defined as the interval of time separating the passage of two pushers (6) through the same point on the path, the control device (5) is arranged so that the period of the actuation member (9) is a multiple of the period of the conveyor (2).

7. A system according to one of Claims 1 to 5, **characterised in that** the said moving support (7) is an endless chain meshing with two pinions, at least one of which is slaved to the control device (5).

8. A system according to one of Claims 1 to 6, **characterised in that** each pusher (6) is in the form of a rigid piece which comprises a first arm (13) able to come into engagement with the drive member (9), and a second arm (14) substantially perpendicular to the first, able to project at least partly from the transport surface (S) in order to come into engagement with an object (3).

9. A system according to Claim 8, **characterised in that** the said second arm (14) comprises a surface (15) substantially perpendicular to the said conveying plane (P) and which, when the pusher (6) is in its active position, extends substantially perpendicular to the transport surface (S) in order to come into contact with the object (3).

10. A system according to Claim 8 or 9, **characterised in that** each pusher (6) comprises an axis (16) substantially perpendicular to the conveying plane (P), forming a means of fixing the pusher (6) to the support (7), and about which the pusher (6) is able to pivot, in order to pass from its inactive position to its active position, or vice-versa.

11. A system according to Claim 10, **characterised in that** the conveyor (2) comprises a guide rail (17) which extends substantially in the conveying plane (P), substantially along the path defined by the support (7).

12. A system according to Claim 11, **characterised in that** the guide rail (17) comprises, substantially along the transport surface (S), a first so-called top track (28) for guiding the pushers (6), contiguous with the transport surface (S), and a second so-called bottom track (23) for guiding the pushers (6), parallel to the first.

13. A system according to Claim 12, **characterised in that** each pusher (6) comprises at least one first lug (24), projecting from the first arm (13) substantially perpendicular to the conveying plane (P), able to cooperate with the bottom track (23) when the pusher (6) is in the inactive position, and with the top track (22) when the pusher (6) is in the active position.

14. A system according to Claim 13, **characterised in that** each pusher (6) also comprises at least one second lug (25), projecting from the second arm (14) perpendicular to the conveying plane (P), able to cooperate with the top track (22) when the pusher (6) is in the inactive position.

15. A system according to one of Claims 12 to 14, **characterised in that** the conveyor (2) has a so-called switching area (26) where the guide rail (17) is interrupted, and in which the pushers (6) are able to pivot about their axis (16) in order to pass from their inactive position to their active position.

16. A system according to Claim 15, **characterised in that** the actuation member (9) comprises a cam (27) extending substantially in the conveying plane (P) close to the said switching area (26), and driven in rotation in this plane about an axis substantially perpendicular to this by the said drive means (10), passing through a first angular position (α1) where the said cam (27) engages at least one of the pushers (6) in order to make it pivot about its axis from its inactive position to its active position when passing through the switching area (26), and a second angular position (α2) where the said cam (27) disengages the pusher (6).

17. A system according to Claim 16, **characterised in that** the said cam (27) is arranged so as to come into engagement momentarily with the second arm (14) of the pusher (6) in order to make the latter pivot by switching its first lug (24) from the bottom track (23) to the top track (22).

18. A system according to Claim 16 or 17, **characterised in that** the said control device (5) is arranged so as to apply to the drive means (10) a periodic continuous speed profile which is variable according to the angular position (α) of the cam (27), this speed being:
- of constant sign, so that the cam (27) turns in a single direction in the same direction as the moving support (7);
- substantially constant between the first and second angular positions (α1, α2) of the cam (27);
- non-constant, increasing and then decreasing between the second and first angular positions (α2, α1) of the cam (27).

19. A system according to Claim 16 or 17, **characterised in that** the said control device (5) is arranged so as to apply to the drive means (10) a periodic continuous speed profile, variable according to the angular position of the cam (27), this speed being:
- of constant sign, so that the cam (27) turns in a single direction in the same direction as the moving support (7);
- substantially constant between the first and second angular positions (α1, α2) of the cam (27);
- the cam (27) turns at a non-constant speed, decreasing and then increasing between the second and first angular positions (α2, α1) of the cam (27).

20. A system according to Claim 18 or 19, **characterised in that** the speed profile is chosen from amongst a pre-programmed set of speed profiles such that the actuation member (9) selectively engages a certain number of successive pushers (6) belonging to a predetermined subset of the set of pushers (6).

21. A system according to one of Claims 2 to 20, **characterised in that** the means (4) of driving the support (7) comprises at least one motor (8) whose speed of rotation is continuously adjustable.

22. A system according to one of Claims 2 to 21, **characterised in that** the means (10) of driving the actuation member (9) comprises at least one motor (8) whose speed of rotation is continuously adjustable.

23. A system according to Claim 21 or 22, **characterised in that** the said motor (8) is an electric motor, of the brushless DC type.
